# EUROPEAN PATENT APPLICATION

(11) **EP 4 832 086 A1**
(43) Date of publication of application: **28.10.2026**
(21) Application number: 24908040.9
(22) Date of filing: 17.12.2024
(51) Int. Cl.: H01M 4/36, C01G 53/00, H01M 4/525, H01M 4/505, H01M 4/131, H01M 10/052, H01M 4/02

(54) **CATHODE ACTIVE MATERIAL FOR LITHIUM SECONDARY BATTERY, PREPARING METHOD OF SAME, AND LITHIUM SECONDARY BATTERY COMPRISING SAME**

(30) Priority: 18.12.2023 KR 20230184525
(71) Applicant: POSCO Holdings Inc., Pohang-si, Gyeongsangbuk-do 37859 (KR)
(72) Inventor: PARK, Jung Woo, Pohang-si, Gyeongsangbuk-do 37859 (KR); KIM, Young Sang, Pohang-si, Gyeongsangbuk-do 37859 (KR); NAM, Sang Cheol, Pohang-si, Gyeongsangbuk-do 37859 (KR); LEE, Taek Gyu, Pohang-si, Gyeongsangbuk-do 37859 (KR); HWANGBO, Geun, Pohang-si, Gyeongsangbuk-do 37859 (KR); LEE, Jaeeun, Pohang-si, Gyeongsangbuk-do 37859 (KR)
(74) Representative: Pfenning, Meinig & Partner mbB
(86) International application number: PCT/KR2024/020548
(87) International publication number: WO 2025/135757

(57) **Abstract**

The present invention relates to a positive electrode active material for a lithium secondary battery, comprising lithium metal oxide particles having a nickel (Ni)-containing layered crystal structure and a coating layer surrounding an entire surface of the lithium metal oxide particles and containing an aluminum (Al) compound, wherein the aluminum compound comprises LiAlO₂ and Al₂O₃, and a content of LiAlO₂ is 10 wt% to 36 wt% based on a total weight of LiAlO₂ and Al₂O₃.

## Description

### [TECHNICAL FIELD]

The present invention relates to a positive electrode active material for a lithium secondary battery, a method for manufacturing the same, and a lithium secondary battery including the same.

### [BACKGROUND ART]

As positive electrode active materials of lithium secondary batteries, lithium cobalt oxide (LiCoO₂), lithium nickel oxide (LiNiO₂), lithium manganese oxide (LiMnO₂ or LiMnO₄, etc.), lithium iron phosphate compounds (LiFePO₄), and the like have been used. Among these, lithium cobalt oxide has advantages of a high operating voltage and excellent capacity characteristics, but cobalt, which is a raw material thereof, is expensive and has unstable supply, making it difficult to commercially apply lithium cobalt oxide to large-capacity batteries. Lithium nickel oxide has poor structural stability, and thus it is difficult to implement sufficient lifespan characteristics. Meanwhile, lithium manganese oxide has excellent stability but has a problem of poor capacity characteristics. Accordingly, lithium composite transition metal oxides including two or more transition metals have been developed to compensate for problems of lithium transition metal oxides including Ni, Co, or Mn alone, and among these, lithium nickel cobalt manganese oxide including Ni, Co, and Mn has been widely used in the field of electric vehicle batteries.

In addition, recently, demand for high-output and high-capacity batteries such as batteries for electric vehicles has increased, and accordingly, the nickel content in positive electrode active materials has gradually increased, that is, a so-called "high-nickel" trend has emerged. When the nickel content in a positive electrode active material increases, initial capacity characteristics are improved. However, when charging and discharging are repeated, a large amount of highly reactive Ni⁴⁺ ions is generated, structural collapse of the positive electrode active material occurs, and as a result, degradation speed of the positive electrode active material increases, thereby causing a problem of deteriorated lifespan characteristics.

To solve this problem, many conventional technologies have coated a surface of a positive electrode material by a dry process. However, a coating layer coated by the dry process has poor coating uniformity, thereby increasing resistance of the coating layer and consequently reducing initial discharge capacity.

Meanwhile, since a high-nickel-based positive electrode material has a high content of residual lithium (LiOH and/or Li₂CO₃) remaining on the surface after manufacture of the positive electrode material, a water-washing process is generally performed to remove residual lithium that impairs safety of a battery. However, the water-washing process damages the surface structure of the positive electrode material, increases the possibility of proton exchange, impairs electrochemical characteristics such as capacity and output of the positive electrode material, increases manufacturing costs of the positive electrode material, and generates wastewater, thereby requiring separate wastewater treatment facilities.

### [DETAILED DESCRIPTION OF THE INVENTION]

### [Technical Problem]

Accordingly, one object of the present invention is to provide a positive electrode active material for a lithium secondary battery, in which capacity (initial discharge capacity) and lifespan characteristics are evenly improved and residual lithium is reduced by coating a surface of a lithium metal oxide with a coating layer, a method for manufacturing the same, and a lithium secondary battery including the same.

### [Technical Solution]

One embodiment of the present invention provides a positive electrode active material for a lithium secondary battery, comprising: lithium metal oxide particles having a nickel (Ni)-containing layered crystal structure; and a coating layer surrounding an entire surface of the lithium metal oxide particles and containing an aluminum (Al) compound, wherein the aluminum compound comprises LiAlO₂ and Al₂O₃, and a content of LiAlO₂ is 10 wt% to 36 wt% based on a total weight of LiAlO₂ and Al₂O₃.

An average thickness of the coating layer may be 0.1 nm to 2.5 nm.

An average difference value between a maximum thickness and a minimum thickness of the coating layer may be 1.0 nm or less.

Aluminum may be partially doped in a shell portion of the lithium metal oxide particles.

A content of an aluminum element in the positive electrode active material may be 600 ppm to 6000 ppm based on the total weight of the positive electrode active material.

The LiAlO₂ may be amorphous.

The Al₂O₃ may be amorphous.

The positive electrode active material may have a residual lithium content of 13000 ppm or less.

A content of nickel in the lithium metal oxide may be 80 mol% or more based on a total number of moles of metals excluding lithium.

The lithium metal oxide may be represented by the following Chemical Formula 1.

[Chemical Formula 1] Liₐ[NiₓCo_{y}Mn_{z}M_{w}]O₂

In Chemical Formula 1, 0.8≤a≤1.3, 0.8≤x<1, 0≤y≤0.2, 0≤z≤0.2, 0≤w≤0.2, x+y+z+w=1, and M is Zr, Al, B, Y, Ti, Nb, W, V, Cr, Mo, Ta, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

Another embodiment of the present invention provides a method for manufacturing a positive electrode active material for a lithium secondary battery, comprising: preparing a lithium metal oxide having a nickel (Ni)-containing layered crystal structure; and forming a coating layer containing an aluminum compound on the lithium metal oxide by an atomic layer deposition method, wherein a water-washing process is not performed after preparing the lithium metal oxide and before forming the coating layer, wherein the aluminum compound comprises LiAlO₂ and Al₂O₃, and wherein a content of LiAlO₂ is 10 wt% to 36 wt% based on a total weight of LiAlO₂ and Al₂O₃.

The atomic layer deposition may be performed for 1 to 8 cycles.

One cycle of the atomic layer deposition may include supplying an aluminum-containing gas onto the lithium metal oxide to adsorb the aluminum-containing gas onto the lithium metal oxide; and supplying and reacting a reactant onto the lithium metal oxide onto which the aluminum-containing gas is adsorbed.

A supply amount of the aluminum-containing gas may be 0.2 wt% to 2.0 wt% based on the total weight of the lithium metal oxide.

A supply amount of the reactant may be 0.002 wt% to 0.03 wt% based on the total weight of the lithium metal oxide.

The atomic layer deposition may be performed at a temperature of 150°C to 300°C. The atomic layer deposition may be performed at a pressure of 1 torr to 10 torr.

Still another embodiment of the present invention provides a positive electrode for a lithium secondary battery, comprising the above-described positive electrode active material.

Still another embodiment of the present invention provides a lithium secondary battery comprising the positive electrode for a lithium secondary battery.

### [Advantageous Effects]

In the positive electrode active material for a lithium secondary battery according to one embodiment of the present invention, as an extremely thin and uniform aluminum (Al) coating layer is coated after a calcination process without a separate water-washing process, capacity and lifespan characteristics can be improved, and residual lithium can be reduced.

In addition, in the positive electrode active material for a lithium secondary battery according to one embodiment of the present invention, residual lithium can be reduced without a water-washing process, and thus there is no wastewater treatment problem for a washing liquid, thereby reducing process costs.

### [BRIEF DESCRIPTION OF THE DRAWINGS]

FIG. 1 is a cross-sectional TEM image after FIB (Focused Ion Beam) milling of a positive electrode active material manufactured according to Example 1.
FIG. 2 is an enlarged image of the TEM image of FIG. 1.
FIG. 3 is a nickel element EDS (Energy Dispersive Spectroscopy) mapping image of the image of FIG. 2.
FIG. 4 is a cobalt element EDS (Energy Dispersive Spectroscopy) mapping image of the image of FIG. 2.
FIG. 5 is a manganese element EDS (Energy Dispersive Spectroscopy) mapping image of the image of FIG. 2.
FIG. 6 is an aluminum element EDS (Energy Dispersive Spectroscopy) mapping image of the image of FIG. 2.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

In addition, unless otherwise specifically stated, % means wt%, and 1 ppm means 0.0001 wt%.

In the present specification, the term "combination(s) thereof" described in a Markush-type expression means one or more mixtures or combinations selected from the group consisting of the components described in the Markush-type expression, and means that one or more selected from the group consisting of the components is included.

Hereinafter, embodiments of the present invention will be described in detail so that a person having ordinary skill in the art to which the present invention pertains can easily practice the present invention. However, the present invention may be embodied in various different forms and is not limited to the embodiments described herein.

### 1. Positive Electrode Active Material

A positive electrode active material for a lithium secondary battery according to one embodiment of the present invention includes lithium metal oxide particles having a nickel (Ni)-containing layered crystal structure. More specifically, the lithium metal oxide may further include cobalt or manganese in addition to nickel, and may further include other doping elements.

The lithium metal oxide particles may be secondary particles formed by aggregation of a plurality of primary particles. In the present specification, "secondary particle" means an aggregate in which several tens to several hundreds of primary particles are aggregated by physical or chemical bonding between the primary particles even without an intentional aggregation or assembly process for the primary particles, that is, a secondary structure.

In addition, "primary particle" means a minimum particle unit distinguished as one lump when a cross-section of a positive electrode active material is observed through a scanning electron microscope (SEM), and may be composed of one crystal grain or may be composed of a plurality of crystal grains. In addition, "crystal grain" means a distinguishable region in which atoms in a primary particle form a lattice structure in a predetermined direction.

A content of nickel in the lithium metal oxide may be 80 mol% or more based on a total number of moles of metals excluding lithium. As described above, as the lithium metal oxide contains a high content of nickel, that is, so-called "high nickel," high capacity of a battery can be achieved.

However, when the nickel content in the positive electrode active material increases, initial capacity characteristics are improved. However, when charging and discharging are repeated, a large amount of highly reactive Ni⁴⁺ ions is generated, structural collapse of the positive electrode active material occurs, and as a result, degradation speed of the positive electrode active material increases, thereby causing a problem of deteriorated lifespan characteristics.

To solve this problem, many conventional technologies have coated a surface of a positive electrode material by a dry process. However, a coating layer coated by the dry process has poor coating uniformity, thereby increasing resistance of the coating layer and consequently reducing initial discharge capacity.

Meanwhile, since a high-nickel-based positive electrode material has a high content of residual lithium (LiOH and/or Li₂CO₃) remaining on the surface after manufacture of the positive electrode material, a water-washing process is generally performed to remove residual lithium that impairs safety of a battery. However, the water-washing process damages the surface structure of the positive electrode material, increases the possibility of proton exchange, impairs electrochemical characteristics such as capacity and output of the positive electrode material, increases manufacturing costs of the positive electrode material, and generates wastewater, thereby requiring separate wastewater treatment facilities.

Accordingly, the present inventors studied a coating method capable of reducing residual lithium without a water-washing process and evenly improving capacity and lifespan characteristics. As a result, the present invention was completed by finding that, after manufacture of a lithium metal oxide, when aluminum is coated by an atomic layer deposition process without a separate water-washing process and other overall coating processes are appropriately controlled, residual lithium of a positive electrode active material can be reduced, and capacity and lifespan characteristics can be evenly improved.

More specifically, the positive electrode active material for a lithium secondary battery according to one embodiment of the present invention includes a coating layer surrounding the entire surface of the lithium metal oxide and containing an aluminum (Al) compound. That is, the coating layer is a conformal-type coating layer uniformly surrounding the entire surface of the lithium metal oxide particles, and has a very thin and uniform thickness. Accordingly, compared with an island-type coating layer, the effect of improving structural stability of the positive electrode active material and the effect of reducing residual lithium can be more suitably implemented, and consequently the effect of improving lifespan and safety of the positive electrode active material can be preferably implemented. Meanwhile, a conformal-type coating layer having a very thin and uniform thickness can be implemented by performing coating by an atomic layer deposition process.

At this time, the aluminum compound comprises LiAlO₂ and Al₂O₃, and the content of LiAlO₂ may be 10 wt% to 36 wt%, and more specifically 12 wt% to 35 wt%, based on the total weight of LiAlO₂ and Al₂O₃. When the content of LiAlO₂ satisfies the above range, the effect of improving capacity and lifespan characteristics of the positive electrode active material can be preferably implemented. Specifically, the content of LiAlO₂ in the above range may be a greater content than a case in which a coating process is performed after a water-washing process is performed after manufacture of a lithium metal oxide. As described above, in the positive electrode active material according to the present invention, an aluminum coating process is performed immediately after manufacture of the lithium metal oxide without a separate water-washing process. At this time, compared with a case in which a water-washing process is performed, when the water-washing process is not performed, a large amount of residual lithium (LiOH and/or Li₂CO₃) remaining on the surface of the lithium metal oxide and the aluminum raw material actively participate in the coating reaction, and thus the content of LiAlO₂ can be obtained to a large extent as in the above range. As a result, the effect of increasing the content of LiAlO₂, which has relatively better electrochemical activity than Al₂O₃, and the effect of not performing a water-washing process act in combination, so that the positive electrode active material according to the present invention can preferably implement an effect of improving capacity and lifespan characteristics.

The content of LiAlO₂ in the above range can be more easily obtained by controlling non-performance of the water-washing process, the number of cycles of the atomic layer deposition process, a temperature during the atomic layer deposition process, a supply amount of an aluminum-containing gas per cycle, a supply amount of a reactant per cycle, and the like. This will be described in more detail in the method for manufacturing a positive electrode active material described below.

Meanwhile, a weight ratio of LiAlO₂ to the total weight of LiAlO₂ and Al₂O₃ in the coating layer can be confirmed through X-ray Photoelectron Spectroscopy (XPS) analysis of the surface of the positive electrode active material.

In addition, an average thickness of the coating layer may be 0.1 nm to 2.5 nm, and more specifically 0.13 nm to 1.5 nm, 0.13 nm to 1.2 nm, or 0.13 nm to 0.9 nm. When the average thickness of the coating layer is too small, the coating effect of the coating layer becomes insignificant, and thus the effect of improving capacity and lifespan characteristics of the positive electrode active material may be insignificant. When the average thickness of the coating layer is too large, the coating layer acts as a resistor, and capacity and lifespan characteristics of the positive electrode active material may rather deteriorate.

The average thickness of the coating layer in the above range can be more easily obtained by controlling non-performance of the water-washing process, the number of cycles of the atomic layer deposition process, a temperature during the atomic layer deposition process, a supply amount of an aluminum-containing gas per cycle, a supply amount of a reactant per cycle, and the like. This will be described in more detail in the method for manufacturing a positive electrode active material described below.

In addition, the average thickness of the coating layer can be measured by the following method. First, the thickness of the coating layer for one positive electrode active material particle can be calculated by analyzing a cross-sectional TEM image after FIB (Focused Ion Beam) milling of the positive electrode active material particle, randomly selecting 10 positions from a surface portion of the positive electrode active material particle, and obtaining an average value of coating layer thicknesses at the selected positions. Next, the average thickness of the coating layer can be calculated by obtaining an average of coating layer thicknesses measured by the same method for 20 arbitrary positive electrode active material particles among positive electrode active material powder.

In addition, an average difference value between a maximum thickness and a minimum thickness of the coating layer may be 1.0 nm or less, and more specifically 0.6 nm or less. That is, since the coating layer according to the present invention is manufactured through an atomic layer deposition-type coating process, thickness uniformity of the coating layer can be improved. Accordingly, resistance of the coating layer can be reduced, and thus the effect of improving capacity and lifespan characteristics of the positive electrode active material can be more preferably implemented.

Meanwhile, the average difference value between the maximum thickness and the minimum thickness of the coating layer in the above range can be more easily obtained by controlling the number of cycles of the atomic layer deposition process, a temperature during the atomic layer deposition process, a supply amount of an aluminum-containing gas per cycle, a supply amount of a reactant per cycle, and the like. This will be described in more detail in the method for manufacturing a positive electrode active material described below.

In addition, the average difference value between the maximum thickness and the minimum thickness of the coating layer can be measured by the following method. First, for one positive electrode active material particle, a difference value between a maximum thickness and a minimum thickness can be calculated by analyzing a cross-sectional TEM image after FIB (Focused Ion Beam) milling of the positive electrode active material particle, calculating a maximum thickness and a minimum thickness among the entire coating layer surrounding the active material particle, and obtaining a difference value therebetween. Next, the average difference value between the maximum thickness and the minimum thickness of the coating layer can be calculated by obtaining an average of coating layer thicknesses measured by the same method for 20 arbitrary positive electrode active material particles among positive electrode active material powder.

In addition, a content of an aluminum element in the positive electrode active material may be 600 ppm to 6000 ppm, and more specifically 630 ppm to 4000 ppm, based on the total weight of the positive electrode active material. When the content of the aluminum element in the positive electrode active material satisfies the above range, various physical properties of the positive electrode active material, such as the content of LiAlO₂ based on the total weight of LiAlO₂ and Al₂O₃, the average thickness of the coating layer, and the average difference value between the maximum thickness and the minimum thickness of the coating layer, can be appropriately implemented within the ranges according to the present invention. Accordingly, the effect of improving capacity and lifespan characteristics of the positive electrode active material can be more preferably implemented.

Meanwhile, the content of the aluminum element in the positive electrode active material in the above range can be more easily obtained by controlling the number of cycles of the atomic layer deposition process, a temperature during the atomic layer deposition process, a supply amount of an aluminum-containing gas per cycle, a supply amount of a reactant per cycle, and the like.

Meanwhile, in the present specification, the content of the aluminum element in the positive electrode active material can be measured through ICP (inductively coupled plasma spectroscopy) component analysis.

In addition, aluminum may be partially doped in a shell portion of the lithium metal oxide particles. More specifically, aluminum may be partially doped into primary particles present in a shell portion region of secondary particles of the lithium metal oxide. The doped aluminum may be derived from an aluminum raw material during the coating process. As aluminum forms a component of the coating layer and is further doped into the shell portion of the lithium metal oxide particles, structural stability of the positive electrode active material is further improved, and the effect of improving capacity and lifespan characteristics can be more preferably implemented. Meanwhile, in the present specification, "shell portion" means a region located within a distance of (1/2)r to r from the center of the particle when a distance from the center of the lithium metal oxide particle to the surface portion thereof is defined as r. That is, the shell portion means a region located on an outer side among inner regions of the lithium metal oxide particle.

At this time, the doped aluminum may be present within a distance of 500 nm from the surface of the lithium metal oxide particles toward the center. When the doping position of the doped aluminum satisfies the above range, the effect of improving capacity and lifespan characteristics can be more preferably implemented.

In addition, the LiAlO₂ may be amorphous, and the Al₂O₃ may be amorphous. Since LiAlO₂ and Al₂O₃, which are aluminum compounds in the coating layer, are amorphous, lithium ion mobility can be improved, and capacity and output characteristics of the positive electrode active material can be more preferably implemented. Amorphousness of the aluminum compounds can be confirmed by TEM image analysis or X-ray diffraction pattern analysis of the positive electrode active material.

In addition, as described above, the positive electrode active material according to the present invention is coated with the aluminum coating layer, and thus a residual lithium content may be 13000 ppm or less, and more specifically 12500 ppm or less. Accordingly, gas generation due to side reactions between residual lithium and an electrolyte solution and a battery swelling phenomenon can be suppressed, thereby improving safety of the battery.

The lithium metal oxide may be represented by the following Chemical Formula 1.

[Chemical Formula 1] Liₐ[NiₓCo_{y}Mn_{z}M_{w}]O₂

In Chemical Formula 1, 0.8≤a≤1.3, 0.8≤x<1, 0≤y≤0.2, 0≤z≤0.2, 0≤w≤0.2, x+y+z+w=1, and M is Zr, Al, B, Y, Ti, Nb, W, V, Cr, Mo, Ta, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

In the lithium metal oxide of Chemical Formula 1, lithium may be included in an amount corresponding to a, that is, 0.8≤a≤1.3. When a is too small, capacity may decrease, and when a is too large, strength of the calcined positive electrode active material may increase, thereby making pulverization difficult, and an amount of gas generation may increase due to an increase in lithium by-products. In consideration of an effect of improving capacity characteristics of the positive electrode active material according to control of the lithium content and a sinterability balance during manufacture of the active material, lithium may be more preferably included in an amount of 0.9≤a≤1.1.

In the lithium metal oxide of Chemical Formula 1, nickel may be included in an amount corresponding to x, that is, 0.8≤x<1. When the nickel content satisfies the above range, high capacity of a battery can be achieved.

In the lithium metal oxide of Chemical Formula 1, cobalt may be included in an amount corresponding to y, that is, 0≤y≤0.2. When the cobalt content is too small, growth of crystal grain size may be inhibited, and output characteristics may deteriorate. When the cobalt content is too large, manufacturing costs may increase and reversible capacity may decrease.

In the lithium metal oxide of Chemical Formula 1, manganese may be included in an amount corresponding to z, that is, 0≤z≤0.2. When the manganese content is too small, production costs may increase and active material stability may decrease. When the manganese content is too large, capacity and output characteristics of the battery may deteriorate.

In the lithium metal oxide of Chemical Formula 1, M, which is another doping element, may be included in an amount corresponding to w, that is, 0≤w≤0.2. At this time, M may be Zr, Al, B, Y, Ti, Nb, W, V, Cr, Mo, Ta, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof. The content of the other doping element may be appropriately selected to implement another doping effect.

### 2. Method for Manufacturing Positive Electrode Active Material

Another embodiment of the present invention provides a method for manufacturing a positive electrode active material for a lithium secondary battery, comprising: preparing a lithium metal oxide having a nickel (Ni)-containing layered crystal structure; and forming a coating layer containing an aluminum compound on the lithium metal oxide by an atomic layer deposition method, wherein a water-washing process is not performed after preparing the lithium metal oxide and before forming the coating layer, wherein the aluminum compound comprises LiAlO₂ and Al₂O₃, and wherein a content of LiAlO₂ is 10 wt% to 36 wt% based on a total weight of LiAlO₂ and Al₂O₃.

Hereinafter, the method for manufacturing a positive electrode active material for a lithium secondary battery according to another embodiment of the present invention will be described in detail step by step.

First, a lithium metal oxide having a nickel (Ni)-containing layered crystal structure is prepared.

More specifically, the lithium metal oxide may be prepared by preparing a metal precursor and then mixing and calcining the metal precursor with a lithium raw material.

More specifically, the metal precursor may be a metal hydroxide.

The metal precursor may be prepared, for example, by adding a complexing agent-containing solution and a pH adjusting agent-containing solution to a metal-containing solution including a nickel raw material, a manganese raw material, or a cobalt raw material to perform a coprecipitation reaction.

The nickel raw material is not particularly limited as long as it is used in the art for manufacturing a positive electrode active material precursor. For example, the nickel raw material may be a nickel-containing sulfate, acetate, nitrate, halide, sulfide, hydroxide, oxide, oxyhydroxide, or the like, and specifically may be NiSO₄, NiSO₄·6H₂O, Ni(OH)₂, NiO, NiOOH, NiCO₃·2Ni(OH)₂·4H₂O, NiC₂O₂·2H₂O, Ni(NO₃)₂·6H₂O, a fatty acid nickel salt, a nickel halide, or a combination thereof, but is not limited thereto.

The cobalt raw material is not particularly limited as long as it is used in the art for manufacturing a positive electrode active material precursor. For example, the cobalt raw material may be a cobalt-containing sulfate, acetate, nitrate, halide, sulfide, hydroxide, oxide, oxyhydroxide, or the like, and specifically may be CoSO₄, CoSO₄·7H₂O, Co(OH)₂, CoOOH, Co(OCOCH₃)₂·4H₂O, Co(NO₃)₂·6H₂O, or a combination thereof, but is not limited thereto.

The manganese raw material is not particularly limited as long as it is used in the art for manufacturing a positive electrode active material precursor. For example, the manganese raw material may be a manganese-containing sulfate, acetate, nitrate, halide, sulfide, hydroxide, oxide, oxyhydroxide, or a combination thereof, and specifically may be MnSO₄, MnCO₃, Mn(NO₃)₂, manganese acetate, a manganese dicarboxylate, manganese citrate, a manganese salt such as a fatty acid manganese salt, a manganese oxide such as Mn₂O₃, MnO₂, and Mn₃O₄, oxyhydroxide, manganese chloride, or a combination thereof, but is not limited thereto.

The metal-containing solution may be prepared by adding the nickel raw material, the manganese raw material, or the cobalt raw material to a solvent, specifically water, or a mixture of water and an organic solvent uniformly miscible with water (for example, alcohol or the like).

The complexing agent-containing solution serves to form a complex, and may include, as a complexing agent, for example, NH₃, NH₄OH, (NH₄)₂SO₄, NH₄NO₃, NH₄Cl, CH₃COONH₄, NH₄CO₃, or a combination thereof, but is not limited thereto. Meanwhile, the complexing agent-containing solution may be used in the form of an aqueous solution, and in this case, water, or a mixture of water and an organic solvent uniformly miscible with water (for example, alcohol or the like) may be used as a solvent.

The pH adjusting agent-containing solution serves as a precipitant or pH adjuster, and may include an alkali compound such as a hydroxide of an alkali metal or alkaline earth metal, such as NaOH, KOH, or Ca(OH)₂, a hydrate thereof, or a combination thereof. Meanwhile, the pH adjusting agent-containing solution may also be used in the form of an aqueous solution, and in this case, water, or a mixture of water and an organic solvent uniformly miscible with water (for example, alcohol or the like) may be used as a solvent. At this time, the pH adjusting agent-containing solution may be added in an amount such that the pH of the reaction solution becomes 10 to 13.

The coprecipitation reaction may be performed under an inert atmosphere such as nitrogen or argon, at a temperature of 30°C to 70°C, and at a pH of 10 to 13.

By the above process, particles of a nickel(-or manganese-cobalt) hydroxide are generated and precipitated in the reaction solution. The precipitated precursor particles may be separated according to a conventional method, washed with water, and dried to obtain a precursor. The precursor may be secondary particles formed by aggregation of primary particles.

At this time, the molar ratio of nickel, cobalt, or manganese in the precursor may be controlled by controlling the concentrations of the nickel raw material, the cobalt raw material, or the manganese raw material. That is, the concentrations of the nickel raw material, the cobalt raw material, and the manganese raw material may be controlled such that the molar ratio of nickel, cobalt, or manganese in the lithium metal oxide, which is the final product, is within the range according to the present invention.

As the lithium raw material, a lithium-containing sulfate, nitrate, acetate, carbonate, oxalate, citrate, halide, hydroxide, oxyhydroxide, or the like may be used, and is not particularly limited as long as it can be dissolved in water. Specifically, the lithium raw material may be Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, Li₃C₆H₅O₇, or a combination thereof, but is not limited thereto.

In addition, the calcination may be performed at a temperature of 750°C to 1000°C. When the calcination temperature is too low, the lithium metal oxide may not be formed. When the calcination temperature is too high, crystal structure defects due to over-calcination may occur, and electrochemical characteristics may deteriorate.

In addition, the calcination may be performed for 5 hours to 20 hours. When the calcination time is too short, the lithium metal oxide may not be formed. When the calcination time is too long, crystal structure defects due to over-calcination may occur, and electrochemical characteristics may deteriorate.

In addition, the atmosphere during calcination is not particularly limited, but, for example, calcination may be performed in an oxygen (O₂) or air atmosphere.

At this time, a water-washing process may not be performed after preparing the lithium metal oxide and before forming the coating layer. The water-washing process is generally performed to remove residual lithium remaining on the surface of the synthesized lithium metal oxide. However, the water-washing process may damage the surface structure of the positive electrode active material and deteriorate electrochemical characteristics such as capacity and output of the positive electrode active material. Accordingly, in the present invention, the residual lithium reduction effect can be substituted by the coating process described below instead of the water-washing process. Accordingly, the residual lithium reduction effect and the effect of preserving electrochemical characteristics such as capacity and output of the positive electrode active material can be simultaneously implemented.

Next, a coating layer containing an aluminum compound is formed on the lithium metal oxide by an atomic layer deposition method.

The atomic layer deposition may be performed for 1 to 8 cycles, and more specifically 1 to 6 cycles. When the number of cycles during atomic layer deposition satisfies the above range, various physical properties of the positive electrode active material, such as the content of LiAlO₂ based on the total weight of LiAlO₂ and Al₂O₃, the average thickness of the coating layer, and the average difference value between the maximum thickness and the minimum thickness of the coating layer, can be appropriately implemented within the ranges according to the present invention. Accordingly, the effect of improving capacity and lifespan characteristics of the positive electrode active material can be more preferably implemented.

One cycle of the atomic layer deposition may include supplying an aluminum-containing gas onto the lithium metal oxide to adsorb the aluminum-containing gas onto the lithium metal oxide; and supplying and reacting a reactant onto the lithium metal oxide onto which the aluminum-containing gas is adsorbed.

At this time, a supply amount of the aluminum-containing gas may be 0.2 wt% to 2.0 wt%, and more specifically 0.3 wt% to 1.4 wt%, based on the total weight of the lithium metal oxide. When the supply amount of the aluminum-containing gas satisfies the above range, aluminum coating can be appropriately performed in atomic layer units per cycle. Accordingly, various physical properties of the positive electrode active material, such as the content of LiAlO₂ based on the total weight of LiAlO₂ and Al₂O₃, the average thickness of the coating layer, and the average difference value between the maximum thickness and the minimum thickness of the coating layer, can be appropriately implemented within the ranges according to the present invention. In addition, the effect of improving capacity and lifespan characteristics of the positive electrode active material can be more preferably implemented.

In addition, a supply amount of the reactant may be 0.002 wt% to 0.03 wt%, and more specifically 0.003 wt% to 0.015 wt%, based on the total weight of the lithium metal oxide. When the supply amount of the reactant satisfies the above range, aluminum coating can be appropriately performed in atomic layer units per cycle. Accordingly, various physical properties of the positive electrode active material, such as the content of LiAlO₂ based on the total weight of LiAlO₂ and Al₂O₃, the average thickness of the coating layer, and the average difference value between the maximum thickness and the minimum thickness of the coating layer, can be appropriately implemented within the ranges according to the present invention. In addition, the effect of improving capacity and lifespan characteristics of the positive electrode active material can be more preferably implemented.

The aluminum-containing gas may be, for example, trimethylaluminum (TMA).

The reactant may be, for example, water (H₂O) or ozone (O₃).

The atomic layer deposition may be performed at a temperature of 150°C to 300°C. When the temperature for performing the atomic layer deposition satisfies the above range, the aluminum-containing gas and the reactant can smoothly react, and the aluminum coating layer can be easily formed. Accordingly, various physical properties of the positive electrode active material, such as the content of LiAlO₂ based on the total weight of LiAlO₂ and Al₂O₃, the average thickness of the coating layer, and the average difference value between the maximum thickness and the minimum thickness of the coating layer, can be appropriately implemented within the ranges according to the present invention. In addition, the effect of improving capacity and lifespan characteristics of the positive electrode active material can be more preferably implemented.

The atomic layer deposition may be performed at a pressure of 1 torr to 10 torr. When the pressure during atomic layer deposition satisfies the above range, the aluminum-containing gas and the reactant can smoothly react, and the aluminum coating layer can be easily formed. Accordingly, various physical properties of the positive electrode active material, such as the content of LiAlO₂ based on the total weight of LiAlO₂ and Al₂O₃, the average thickness of the coating layer, and the average difference value between the maximum thickness and the minimum thickness of the coating layer, can be appropriately implemented within the ranges according to the present invention. In addition, the effect of improving capacity and lifespan characteristics of the positive electrode active material can be more preferably implemented.

### 3. Positive Electrode and Lithium Secondary Battery

Still another embodiment of the present invention provides a positive electrode for a lithium secondary battery, comprising the above-described positive electrode active material.

More specifically, the positive electrode may include a positive electrode current collector and a positive electrode active material layer disposed on the positive electrode current collector and including the above-described positive electrode active material.

The positive electrode current collector is not particularly limited as long as it has conductivity without causing a chemical change in the battery, and examples thereof may include stainless steel, aluminum, nickel, titanium, calcined carbon, or aluminum or stainless steel surface-treated with carbon, nickel, titanium, silver, or the like. In addition, the positive electrode current collector may generally have a thickness of 3 µm to 500 µm, and fine irregularities may be formed on a surface of the positive electrode current collector to increase adhesion of the positive electrode active material. For example, the positive electrode current collector may be used in various forms such as a film, a sheet, a foil, a net, a porous body, a foam, and a nonwoven fabric.

The positive electrode active material layer may include a binder and/or a conductive material together with the above-described positive electrode active material.

At this time, the binder serves to improve adhesion between positive electrode active material particles and adhesion between the positive electrode active material and the positive electrode current collector. Specific examples thereof may include polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene-butadiene rubber (SBR), fluorine rubber, or various copolymers thereof, and one thereof alone or a mixture of two or more thereof may be used, but the binder is not limited thereto. The binder may be included in an amount of 1 wt% to 30 wt% based on the total weight of the positive electrode active material layer.

The conductive material is used to impart conductivity to the electrode, and may be used without particular limitation as long as it has electron conductivity and does not cause a chemical change in the battery to be configured. Specific examples thereof may include graphite such as natural graphite or artificial graphite; carbon-based materials such as carbon black, acetylene black, Ketjen black, channel black, furnace black, lamp black, thermal black, and carbon fibers; metal powder or metal fibers such as copper, nickel, aluminum, and silver; conductive whiskers such as zinc oxide and potassium titanate; conductive metal oxides such as titanium oxide; or conductive polymers such as polyphenylene derivatives, and one thereof alone or a mixture of two or more thereof may be used, but the conductive material is not limited thereto. The conductive material may generally be included in an amount of 1 wt% to 30 wt% based on the total weight of the positive electrode active material layer.

The positive electrode may be manufactured according to a conventional method for manufacturing a positive electrode, except that the above-described positive electrode active material is used.

Specifically, the positive electrode may be manufactured by applying, onto a positive electrode current collector, a composition for forming a positive electrode active material layer including the above-described positive electrode active material and, as necessary, optionally including a binder, a conductive material, or a solvent, and then drying and rolling the same. At this time, the types and contents of the positive electrode active material, the binder, and the conductive material are as described above.

The solvent may be a solvent generally used in the art, and examples thereof may include dimethyl sulfoxide (DMSO), isopropyl alcohol, N-methylpyrrolidone (NMP), acetone, or water, and one thereof alone or a mixture of two or more thereof may be used. The amount of the solvent used is sufficient as long as it can dissolve or disperse the positive electrode active material, the conductive material, and the binder in consideration of a coating thickness and manufacturing yield of the slurry, and can provide a viscosity capable of exhibiting excellent thickness uniformity during subsequent coating for manufacturing the positive electrode.

Alternatively, the positive electrode may be manufactured by casting the composition for forming the positive electrode active material layer on a separate support, and then laminating a film obtained by peeling the composition from the support onto a positive electrode current collector.

Still another embodiment of the present invention provides a lithium secondary battery comprising the above-described positive electrode for a lithium secondary battery.

More specifically, the lithium secondary battery may include a positive electrode, a negative electrode, a separator, and an electrolyte.

The lithium secondary battery may optionally further include a battery case accommodating an electrode assembly of the positive electrode, the negative electrode, and the separator, and a sealing member sealing the battery case.

The negative electrode may include a negative electrode current collector and a negative electrode active material layer positioned on the negative electrode current collector.

The negative electrode current collector is not particularly limited as long as it has high conductivity without causing a chemical change in the battery, and examples thereof may include copper, stainless steel, aluminum, nickel, titanium, calcined carbon, copper or stainless steel surface-treated with carbon, nickel, titanium, silver, or the like, an aluminum-cadmium alloy, and the like. In addition, the negative electrode current collector may generally have a thickness of 3 µm to 500 µm, and like the positive electrode current collector, fine irregularities may be formed on a surface of the current collector to enhance bonding force of the negative electrode active material. For example, the negative electrode current collector may be used in various forms such as a film, a sheet, a foil, a net, a porous body, a foam, and a nonwoven fabric.

The negative electrode active material layer may optionally include a binder and a conductive material together with a negative electrode active material. As an example, the negative electrode active material layer may be manufactured by applying and drying, on a negative electrode current collector, a composition for forming a negative electrode active material layer including a negative electrode active material and optionally including a binder and a conductive material, or may be manufactured by casting the composition for forming the negative electrode on a separate support and then laminating a film obtained by peeling the composition from the support onto the negative electrode current collector.

As the negative electrode active material, a compound capable of reversible intercalation and deintercalation of lithium may be used. Specific examples thereof may include carbonaceous materials such as artificial graphite, natural graphite, graphitized carbon fibers, and amorphous carbon; metallic compounds capable of alloying with lithium, such as Si, Al, Sn, Pb, Zn, Bi, In, Mg, Ga, Cd, a Si alloy, a Sn alloy, or an Al alloy; metal oxides capable of doping and dedoping lithium, such as SiOβ (0<β<2), SnO₂, vanadium oxide, and lithium vanadium oxide; or composites including the metallic compound and a carbonaceous material, such as a Si-C composite or a Sn-C composite, and one thereof or a mixture of two or more thereof may be used. In addition, a metal lithium thin film may be used as the negative electrode active material. Further, as the carbon material, both low-crystalline carbon and high-crystalline carbon may be used. Representative examples of the low-crystalline carbon include soft carbon and hard carbon, and representative examples of the high-crystalline carbon include amorphous, plate-like, flake-like, spherical, or fibrous natural graphite or artificial graphite, Kish graphite, pyrolytic carbon, mesophase pitch-based carbon fibers, meso-carbon microbeads, mesophase pitches, and high-temperature calcined carbon such as petroleum or coal tar pitch-derived cokes.

The binder and the conductive material may be the same as those described above for the positive electrode.

The separator separates the negative electrode and the positive electrode and provides a movement path for lithium ions, and may be used without particular limitation as long as it is commonly used as a separator in lithium secondary batteries. In particular, a separator having low resistance to ion movement of the electrolyte and excellent electrolyte solution impregnation ability is preferable. Specifically, a porous polymer film, for example, a porous polymer film made of a polyolefin-based polymer such as an ethylene homopolymer, a propylene homopolymer, an ethylene/butene copolymer, an ethylene/hexene copolymer, or an ethylene/methacrylate copolymer, or a laminated structure having two or more layers thereof may be used. In addition, a conventional porous nonwoven fabric, for example, a nonwoven fabric made of high-melting-point glass fibers, polyethylene terephthalate fibers, or the like, may also be used. In addition, a coated separator including a ceramic component or a polymer material may be used to secure heat resistance or mechanical strength, and may optionally be used in a single-layer or multilayer structure.

Examples of the electrolyte may include an organic liquid electrolyte, an inorganic liquid electrolyte, a solid polymer electrolyte, a gel-type polymer electrolyte, a solid inorganic electrolyte, a molten-type inorganic electrolyte, and the like, which can be used when manufacturing a lithium secondary battery, but the electrolyte is not limited thereto.

Specifically, the organic liquid electrolyte may include an organic solvent and a lithium salt.

As the organic solvent, any solvent may be used without particular limitation as long as it can serve as a medium through which ions involved in an electrochemical reaction of the battery can move. Specifically, examples of the organic solvent may include ester-based solvents such as methyl acetate, ethyl acetate, γ-butyrolactone, and ε-caprolactone; ether-based solvents such as dibutyl ether and tetrahydrofuran; ketone-based solvents such as cyclohexanone; aromatic hydrocarbon-based solvents such as benzene and fluorobenzene; carbonate-based solvents such as dimethyl carbonate (DMC), diethyl carbonate (DEC), methyl ethyl carbonate (MEC), ethyl methyl carbonate (EMC), ethylene carbonate (EC), and propylene carbonate (PC); alcohol-based solvents such as ethyl alcohol and isopropyl alcohol; nitriles represented by R-CN, wherein R is a C2 to C20 linear, branched, or cyclic hydrocarbon group and may include a double-bond aromatic ring or an ether bond; amides such as dimethylformamide; dioxolanes such as 1,3-dioxolane; or sulfolanes. Among these, carbonate-based solvents are preferable, and a mixture of a cyclic carbonate having high ionic conductivity and high dielectric constant, which can improve charge/discharge performance of a battery, such as ethylene carbonate or propylene carbonate, and a low-viscosity linear carbonate-based compound, such as ethyl methyl carbonate, dimethyl carbonate, or diethyl carbonate, is more preferable. In this case, when the cyclic carbonate and the chain carbonate are mixed and used at a volume ratio of about 1:1 to about 1:9, excellent electrolyte performance may be exhibited.

The lithium salt may be used without particular limitation as long as it is a compound capable of providing lithium ions used in a lithium secondary battery. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used. The concentration of the lithium salt is preferably used within a range of 0.1 M to 2.0 M. When the concentration of the lithium salt is within the above range, the electrolyte has appropriate conductivity and viscosity, and thus excellent electrolyte performance can be exhibited and lithium ions can effectively move.

In addition to the above electrolyte components, the electrolyte may further include one or more additives, for example, for the purpose of improving lifespan characteristics of the battery, suppressing reduction in battery capacity, improving discharge capacity of the battery, and the like, such as a haloalkylene carbonate-based compound such as difluoroethylene carbonate, pyridine, triethyl phosphite, triethanolamine, cyclic ether, ethylene diamine, n-glyme, hexamethylphosphoric triamide, a nitrobenzene derivative, sulfur, a quinone imine dye, an N-substituted oxazolidinone, an N,N-substituted imidazolidine, ethylene glycol dialkyl ether, an ammonium salt, pyrrole, 2-methoxy ethanol, or aluminum trichloride. At this time, the additive may be included in an amount of 0.1 wt% to 5 wt% based on the total weight of the electrolyte.

As described above, since the lithium secondary battery including the positive electrode active material according to the present invention stably exhibits excellent discharge capacity, output characteristics, and capacity retention rate, the lithium secondary battery is useful for portable devices such as mobile phones, notebook computers, and digital cameras, and in the field of electric vehicles such as hybrid electric vehicles (HEVs).

Accordingly, still another embodiment of the present invention provides a battery module including the lithium secondary battery as a unit cell, and a battery pack including the same.

The battery module or battery pack may be used as a power source for one or more medium- to large-sized devices selected from power tools; electric vehicles including electric vehicles (EVs), hybrid electric vehicles, and plug-in hybrid electric vehicles (PHEVs); or power storage systems.

Hereinafter, embodiments of the present invention will be described in more detail through Examples. However, the following Examples are only preferred embodiments of the present invention, and the present invention is not limited by the following Examples.

### Example 1

### (1) Manufacture of Positive Electrode Active Material

(Preparation of Lithium Metal Oxide) A lithium metal oxide in the form of secondary particles having a composition of LiNi_{0.83}Co_{0.12}Mn_{0.05}O₂ was prepared.

At this time, after synthesis of the lithium metal oxide, a separate water-washing process was not performed.

(Coating) A fluidized-bed-type atomic layer deposition reactor was used, and low-vacuum conditions were maintained such that a reaction temperature was maintained at 150°C to 300°C and a pressure in a chamber was maintained at 1 torr to 10 torr. As a precursor, trimethylaluminum (TMA, Al(CH₃)₃) was used as an aluminum-containing gas, and water (H₂O) was used as a reactant.

The prepared lithium metal oxide was introduced into the atomic layer deposition reactor, TMA was injected together with N₂ gas and chemically adsorbed and saturated on the lithium metal oxide base material, and then H₂O was injected again to cause a chemical reaction, thereby forming an aluminum compound-containing coating layer. In addition, an input amount of TMA per cycle was 0.5 wt% based on the total weight of the lithium metal oxide, and an input amount of H₂O per cycle was 0.005 wt% based on the total weight of the lithium metal oxide.

This series of processes was defined as one cycle, and a total of one cycle was performed.

### (2) Manufacture of Lithium Secondary Battery

A slurry for manufacturing an electrode plate was prepared by mixing the manufactured positive electrode active material, a conductive material (carbon black, Denka black), and a binder (PVDF, KF1100) at 96.5:1.5:2 wt%, and adding NMP (N-methyl-2-pyrrolidone) to adjust viscosity such that a solid content was about 30%. The prepared slurry was coated on a 20 µm-thick Al foil using a doctor blade, and then dried and rolled. The electrode loading amount was 15.4 mg/cm², and the rolling density (25°C, 20 kN) was 3.6 g/cm³.

As the electrolyte solution, an electrolyte solution obtained by adding 3.0 vol% VC based on the total amount of the electrolyte solution to 1 M LiPF₆ in EC:DMC:EMC=3:4:3 (vol%) was used, and a coin cell was manufactured using a PP separator and a lithium negative electrode (200 µm, Honzo Metal).

### Example 2

A positive electrode active material and a lithium secondary battery were manufactured in the same manner as in Example 1, except that, in the coating step, the number of atomic layer deposition cycles was 2 cycles.

### Example 3

A positive electrode active material and a lithium secondary battery were manufactured in the same manner as in Example 1, except that, in the coating step, the number of atomic layer deposition cycles was 3 cycles.

### Example 4

A positive electrode active material and a lithium secondary battery were manufactured in the same manner as in Example 1, except that, in the coating step, the number of atomic layer deposition cycles was 4 cycles.

### Example 5

A positive electrode active material and a lithium secondary battery were manufactured in the same manner as in Example 1, except that, in the coating step, the number of atomic layer deposition cycles was 5 cycles.

### Comparative Example 1

A positive electrode active material and a lithium secondary battery were manufactured in the same manner as in Example 1, except that, after preparation of the lithium metal oxide, the coating process was not performed.

### Comparative Example 2

A positive electrode active material and a lithium secondary battery were manufactured in the same manner as in Example 1, except that, after preparation of the lithium metal oxide and before performing the coating process, a water-washing process using distilled water was performed.

### Comparative Example 3

A positive electrode active material and a lithium secondary battery were manufactured in the same manner as in Example 1, except that, in the coating step, the number of atomic layer deposition cycles was 10 cycles.

Table 1 below summarizes process conditions of the Examples and Comparative Examples.

**[Table 1]**

| | TMA Input Amount Based on Total Weight of Lithium Metal Oxide Per Cycle (wt%) | H₂O Input Amount Based on Total Weight of Lithium Metal Oxide Per Cycle (wt%) | Whether Water-Washing Process Was Performed | Number of Atomic Layer Deposition Cycles |
|---|---|---|---|---|
| Comparative Example 1 | - | - | 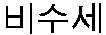 | - |
| Comparative Example 2 | 0.5 | 0.005 | 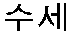 | 1 |
| Example 1 | 0.5 | 0.005 | 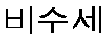 | 1 |
| Example 2 | 0.5 | 0.005 | 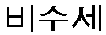 | 2 |
| Example 3 | 0.5 | 0.005 | 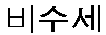 | 3 |
| Example 4 | 0.5 | 0.005 | 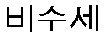 | 4 |
| Example 5 | 0.5 | 0.005 | 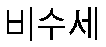 | 5 |
| Comparative Example 3 | 1 | 0.01 | 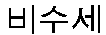 | 10 |

Tables 2 and 3 below summarize evaluation results of physical properties of positive electrode active materials and electrochemical characteristics of lithium secondary batteries according to Experimental Examples 2 and 3 described below.

**[Table 2]**

| | Average Thickness of Coating Layer (nm) | Average Difference Between Maximum Thickness and Minimum Thickness of Coating Layer (nm) | LiAlO₂/(Al₂O₃+LiAlO₂) Weight Ratio (%) | Al Element Content (ppm) | LiOH (ppm) | Li₂CO₃ (ppm) | Total (ppm) |
|---|---|---|---|---|---|---|---|
| Comparative Example 1 | - | - | - | N/A | 5,464 | 8,433 | 13,897 |
| Comparative Example 2 | 0.11 | 0.11 | 8.3 | 556 | 4,667 | 4,371 | 9,038 |
| Example 1 | 0.15 | 0.06 | 15.3 | 659 | 4,940 | 5,844 | 10,784 |
| Example 2 | 0.34 | 0.12 | 24.2 | 1,010 | 5,458 | 6,598 | 12,056 |
| Example 3 | 0.37 | 0.14 | 26.9 | 1,772 | 4,833 | 5,772 | 10,605 |
| Example 4 | 0.54 | 0.25 | 33.2 | 2,633 | 5,677 | 6,722 | 12,399 |
| Example 5 | 0.77 | 0.38 | 30.5 | 3,022 | 5,881 | 6,522 | 12,403 |
| Comparative Example 3 | 3.5 | 1.2 | 38.2 | 8,230 | 4,667 | 4,371 | 9,038 |

**[Table 3]**

| | Initial Capacity | | | High-Temperature Lifespan Characteristics (45°C, 30 cycles) | | | |
|---|---|---|---|---|---|---|---|
| | Initial Charge Capacity (mAh/g) | Initial Discharge Capacity (mAh/g) | Initial Efficiency (%) | Capacity Retention Rate (%) | Initial Resistance (Ω) | 30th Resistance (Ω) | Resistance Increase Rate (%) |
| Comparative Example 1 | 223.90 | 195.30 | 87.23 | 90.90 | 15.20 | 34.80 | 128.95 |
| Comparative Example 2 | 214.10 | 203.80 | 95.19 | 93.80 | 11.00 | 18.20 | 65.45 |
| Example 1 | 217.30 | 206.30 | 94.94 | 94.30 | 10.50 | 17.50 | 66.67 |
| Example 2 | 217.90 | 208.10 | 95.50 | 94.20 | 10.60 | 19.10 | 80.19 |
| Example 3 | 217.80 | 208.20 | 95.59 | 94.20 | 11.10 | 18.40 | 65.77 |
| Example 4 | 218.30 | 209.00 | 95.74 | 94.40 | 10.60 | 19.50 | 83.96 |
| Example 5 | 217.20 | 208.90 | 96.18 | 94.20 | 11.60 | 19.80 | 70.69 |
| Comparative Example 3 | 214.10 | 192.30 | 89.82 | 95.00 | 16.10 | 42.10 | 161.49 |

### Experimental Example 1: Cross-Sectional Analysis of Positive Electrode Active Material

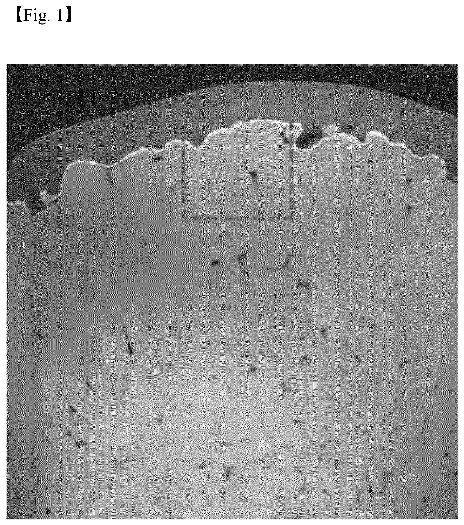

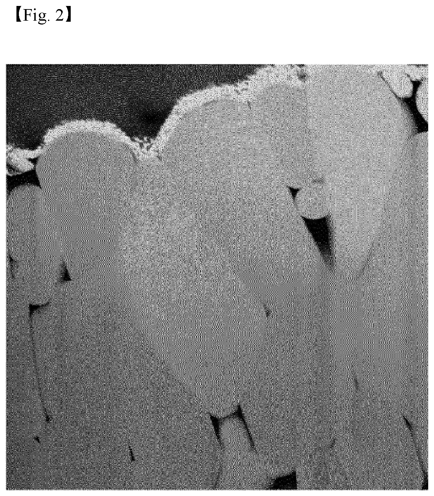

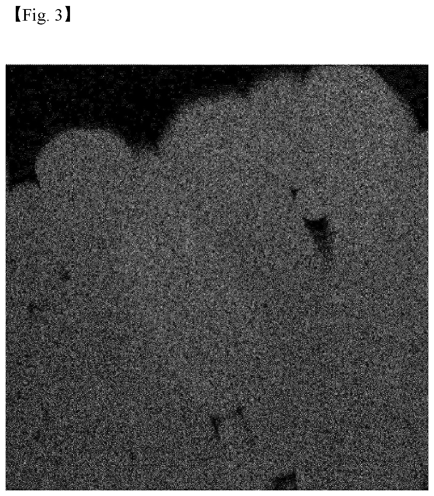

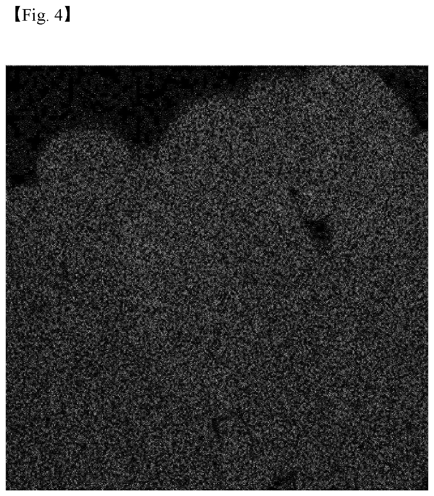

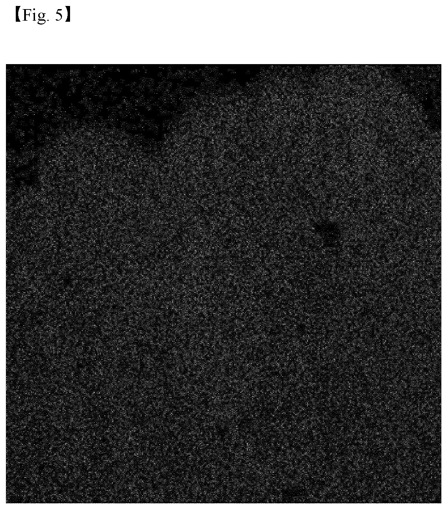

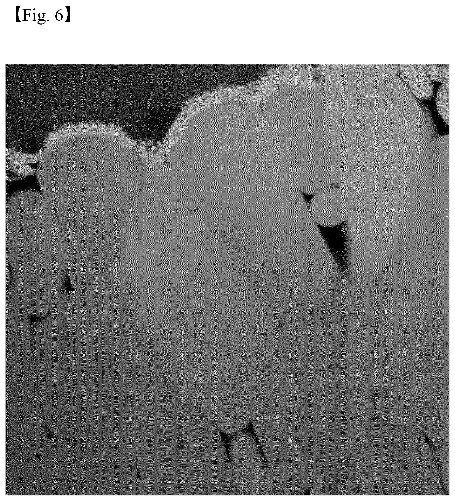

FIG. 1 is a cross-sectional TEM image after FIB (Focused Ion Beam) milling of a positive electrode active material manufactured according to Example 1. FIG. 2 is an enlarged image of the TEM image of FIG. 1. FIG. 3 is a nickel element EDS (Energy Dispersive Spectroscopy) mapping image of the image of FIG. 2. FIG. 4 is a cobalt element EDS (Energy Dispersive Spectroscopy) mapping image of the image of FIG. 2. FIG. 5 is a manganese element EDS (Energy Dispersive Spectroscopy) mapping image of the image of FIG. 2. FIG. 6 is an aluminum element EDS (Energy Dispersive Spectroscopy) mapping image of the image of FIG. 2.

Referring to FIGS. 1 and 2, it was confirmed that, in the positive electrode active material of Example 1, an aluminum coating layer was very thinly and uniformly coated on the entire surface of the secondary particle in a conformal type. In addition, it was confirmed that the coating layer according to the present invention included an amorphous aluminum compound.

Referring to FIGS. 3 to 6, it was confirmed that nickel, cobalt, and manganese were uniformly present in the primary particles of the lithium metal oxide according to the present invention. In particular, it was confirmed that aluminum not only formed a component of the coating layer on the entire surface of the secondary particle, but also that a portion thereof was doped into and present inside the primary particles positioned in the shell portion (outer region) of the secondary particle.

### Experimental Example 2: Evaluation of Physical Properties of Positive Electrode Active Material

### (1) Evaluation of Average Thickness of Coating Layer

First, the thickness of the coating layer for one positive electrode active material particle was calculated by analyzing a cross-sectional TEM image after FIB (Focused Ion Beam) milling of the positive electrode active material particle, randomly selecting 10 positions from a surface portion of the positive electrode active material particle, and obtaining an average value of coating layer thicknesses at the selected positions. Next, the average thickness of the coating layer was calculated by obtaining an average of coating layer thicknesses measured by the same method for 20 arbitrary positive electrode active material particles among positive electrode active material powder.

### (2) Evaluation of Average Difference Value Between Maximum Thickness and Minimum Thickness of Coating Layer

First, for one positive electrode active material particle, a difference value between a maximum thickness and a minimum thickness was calculated by analyzing a cross-sectional TEM image after FIB (Focused Ion Beam) milling of the positive electrode active material particle, calculating a maximum thickness and a minimum thickness among the entire coating layer surrounding the active material particle, and obtaining a difference value therebetween. Next, the average difference value between the maximum thickness and the minimum thickness of the coating layer was calculated by obtaining an average of coating layer thicknesses measured by the same method for 20 arbitrary positive electrode active material particles among positive electrode active material powder.

### (3) Evaluation of Weight Ratio of LiAlO₂ to Total Weight of LiAlO₂ and Al₂O₃ in Coating Layer

A weight ratio of LiAlO₂ to the total weight of LiAlO₂ and Al₂O₃ in the coating layer was evaluated through X-ray Photoelectron Spectroscopy (XPS) analysis of the surface of the positive electrode active material.

### (4) Evaluation of Al Element Content in Positive Electrode Active Material

The Al element content in the positive electrode active material was evaluated through ICP (inductively coupled plasma spectroscopy) component analysis.

### (5) Evaluation of Residual Lithium Content

After distilled water was added to the positive electrode active material, residual lithium was extracted using a stirrer, and the positive electrode active material powder and the extract were separated using a filtering apparatus. Thereafter, the extract was measured through neutralization titration using a Metrohm potentiometric titrator to evaluate residual lithium.

### Experimental Example 3: Evaluation of Electrochemical Characteristics of Lithium Secondary Battery

### (1) Evaluation of Initial Capacity and Initial Efficiency

After lithium secondary battery half cells were manufactured and aged at 25°C for 12 hours, a charge/discharge test was performed at 25°C. For initial capacity evaluation, 200 mAh/g was used as a reference capacity, and charging was performed to 4.25 V at a constant current of 0.1 C, followed by switching to constant voltage, and charging was continued until the end current reached 0.05 C. After charging, a rest time of 10 minutes was provided, and discharge was performed to 2.5 V at a constant current of 0.1 C based on a reference capacity of 200 mAh/g.

### (2) Evaluation of High-Temperature Capacity Retention Rate (45°C, 30 Cycles)

After lithium secondary battery half cells were manufactured, charging was performed at 45°C to 4.25 V at a constant current of 0.33 C, followed by switching to constant voltage, and charging was performed until the end current reached 0.05 C. After charging, a rest time of 10 minutes was provided, and discharge was performed to 2.5 V at a constant current of 0.33 C. Charging and discharging were performed 30 times under such charge/discharge cycle conditions, and a capacity retention rate of the 30th cycle relative to the first cycle was calculated.

### (3) Evaluation of High-Temperature Resistance Increase Rate (45°C, 30 Cycles)

After lithium secondary battery half cells were manufactured, charging was performed at 45°C to 4.25 V at a constant current of 0.33 C, followed by switching to constant voltage, and charging was performed until the end current reached 0.05 C. After charging, a rest time of 10 minutes was provided, and discharge was performed to 2.5 V at a constant current of 0.33 C. Charging and discharging were performed 30 times under such charge/discharge cycle conditions, and a resistance increase rate of the 30th cycle relative to the first cycle was calculated.

Referring to Table 1, in the case of Examples 1 to 5 in which overall coating process conditions according to the present invention, such as non-performance of the water-washing process, aluminum coating by the atomic layer deposition process, the number of atomic layer deposition cycles, and input amounts of TMA and H₂O relative to the lithium metal oxide during one cycle, were controlled, it was confirmed that various physical properties, including the weight ratio of LiAlO₂ to the total weight of LiAlO₂ and Al₂O₃ in the coating layer and the average thickness of the coating layer, were appropriately obtained within the ranges according to the present invention. In addition, it was confirmed that the residual lithium content was lower than that of Comparative Example 1, which was the lithium metal oxide base material. As a result, it was confirmed that battery capacity (initial discharge capacity), resistance characteristics (initial resistance), and lifespan characteristics (capacity retention rate, resistance increase rate) were excellently improved compared with Comparative Example 1, which was the lithium metal oxide base material.

In contrast, in the case of Comparative Example 1, which was the lithium metal oxide base material, it was confirmed that the residual lithium content was higher than those of the Examples, and capacity, resistance characteristics, and lifespan characteristics of the battery were inferior.

In the case of Comparative Example 2, as a result of performing the water-washing process, it was confirmed that the weight ratio of LiAlO₂ to the total weight of LiAlO₂ and Al₂O₃ in the coating layer was outside the range according to the present invention, and that, even though the same amount of coating raw material was introduced during the coating process, the content of the aluminum element in the positive electrode active material was reduced. This appears to result from a decrease in coating yield as a surface reaction between residual lithium remaining on the surface of the lithium metal oxide and the aluminum raw material was reduced. In addition, it was confirmed that capacity characteristics of the battery were lower than those of the Examples, and that the effect of improving capacity retention rate was also lower than those of the Examples.

In the case of Comparative Example 3, as a result of the excessive number of atomic layer deposition cycles, it was confirmed that the weight ratio of LiAlO₂ to the total weight of LiAlO₂ and Al₂O₃, the average thickness of the coating layer, and the average difference value between the maximum thickness and the minimum thickness of the coating layer were outside the ranges according to the present invention. In addition, it was confirmed that capacity characteristics of the battery were remarkably deteriorated compared with the Examples, and that, although the capacity retention rate was at a level similar to those of the Examples, resistance characteristics and resistance increase rate characteristics were remarkably inferior compared with the Examples.

Although preferred embodiments of the present invention have been described above, the present invention is not limited thereto, and various modifications may be made and practiced within the scope of the claims, the detailed description of the invention, and the accompanying drawings, and such modifications also naturally fall within the scope of the present invention.

Accordingly, the substantial scope of rights of the present invention should be defined by the appended claims and equivalents thereof.

## Claims

1. A positive electrode active material for a lithium secondary battery, comprising:
lithium metal oxide particles having a nickel (Ni)-containing layered crystal structure; and
a coating layer surrounding an entire surface of the lithium metal oxide particles and containing an aluminum (Al) compound,
wherein the aluminum compound comprises LiAlO₂ and Al₂O₃, and
wherein a content of LiAlO₂ is 10 wt% to 36 wt% based on a total weight of LiAlO₂ and Al₂O₃.

2. The positive electrode active material for a lithium secondary battery of claim 1,
wherein an average thickness of the coating layer is 0.1 nm to 2.5 nm.

3. The positive electrode active material for a lithium secondary battery of claim 1,
wherein an average difference value between a maximum thickness and a minimum thickness of the coating layer is 1.0 nm or less.

4. The positive electrode active material for a lithium secondary battery of claim 1,
wherein aluminum is partially doped in a shell portion of the lithium metal oxide particles.

5. The positive electrode active material for a lithium secondary battery of claim 1,
wherein a content of an aluminum element in the positive electrode active material is 600 ppm to 6000 ppm based on a total weight of the positive electrode active material.

6. The positive electrode active material for a lithium secondary battery of claim 1,
wherein the LiAlO₂ is amorphous.

7. The positive electrode active material for a lithium secondary battery of claim 1,
wherein the Al₂O₃ is amorphous.

8. The positive electrode active material for a lithium secondary battery of claim 1,
wherein a residual lithium content is 13000 ppm or less.

9. The positive electrode active material for a lithium secondary battery of claim 1,
wherein a content of nickel in the lithium metal oxide is 80 mol% or more based on a total number of moles of metals excluding lithium.

10. The positive electrode active material for a lithium secondary battery of claim 1,
wherein the lithium metal oxide is represented by the following Chemical Formula 1:
[Chemical Formula 1] Liₐ[NiₓCo_{y}Mn_{z}M_{w}]O₂
wherein, in Chemical Formula 1, 0.8≤a≤1.3, 0.8≤x<1, 0≤y≤0.2, 0≤z≤0.2, 0≤w≤0.2, x+y+z+w=1, and M is Zr, Al, B, Y, Ti, Nb, W, V, Cr, Mo, Ta, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

11. A method for manufacturing a positive electrode active material for a lithium secondary battery, comprising:
preparing a lithium metal oxide having a nickel (Ni)-containing layered crystal structure; and
forming a coating layer containing an aluminum compound on the lithium metal oxide by an atomic layer deposition method,
wherein a water-washing process is not performed after preparing the lithium metal oxide and before forming the coating layer,
wherein the aluminum compound comprises LiAlO₂ and Al₂O₃, and
wherein a content of LiAlO₂ is 10 wt% to 36 wt% based on a total weight of LiAlO₂ and Al₂O₃.

12. The method for manufacturing a positive electrode active material for a lithium secondary battery of claim 11,
wherein the atomic layer deposition is performed for 1 to 8 cycles.

13. The method for manufacturing a positive electrode active material for a lithium secondary battery of claim 11,
wherein one cycle of the atomic layer deposition comprises:
supplying an aluminum-containing gas onto the lithium metal oxide to adsorb the aluminum-containing gas onto the lithium metal oxide; and
supplying and reacting a reactant onto the lithium metal oxide onto which the aluminum-containing gas is adsorbed.

14. The method for manufacturing a positive electrode active material for a lithium secondary battery of claim 11,
wherein a supply amount of the aluminum-containing gas is 0.2 wt% to 2.0 wt% based on a total weight of the lithium metal oxide.

15. The method for manufacturing a positive electrode active material for a lithium secondary battery of claim 11,
wherein a supply amount of the reactant is 0.002 wt% to 0.03 wt% based on a total weight of the lithium metal oxide.

16. The method for manufacturing a positive electrode active material for a lithium secondary battery of claim 11,
wherein the atomic layer deposition is performed at a temperature of 150°C to 300°C.

17. The method for manufacturing a positive electrode active material for a lithium secondary battery of claim 11,
wherein the atomic layer deposition is performed at a pressure of 1 torr to 10 torr.

18. A positive electrode for a lithium secondary battery, comprising the positive electrode active material of claim 1.

19. A lithium secondary battery comprising the positive electrode for a lithium secondary battery of claim 18.
